**Europäisches Patentamt**

**European Patent Office**

**Office européen des brevets**

(11) Publication number: **0 535 774 B1**

# EUROPEAN PATENT SPECIFICATION

(45) Date of publication of patent specification: **30.08.95** (51) Int. Cl.⁶: **C09D 5/00**, C09D 7/12, C09B 67/00, C09D 7/00

(21) Application number: **92304627.0**

(22) Date of filing: **21.05.92**

(54) **Coating composition.**

(30) Priority: **04.10.91 JP 283907/91**

(43) Date of publication of application:
**07.04.93 Bulletin 93/14**

(45) Publication of the grant of the patent:
**30.08.95 Bulletin 95/35**

(84) Designated Contracting States:
**DE FR GB**

(56) References cited:
**EP-A- 0 254 681       EP-A- 0 272 216**
**EP-A- 0 273 866       WO-A-91/02034**
**DE-A- 2 640 063       DE-A- 4 037 556**
**GB-A- 2 114 991**

(73) Proprietor: **TOYO INK MANUFACTURING CO., LTD.**
**No. 3-13, Kyobashi 2-chome**
**Chuo-ku**
**Tokyo (JP)**

(72) Inventor: **Mochizuki, Akimitsu, c/o Toyo Ink Manufac. Co. Ltd**
**3-13, Kyobashi 2-chome,**
**Chuo-ku**
**Tokyo (JP)**

(74) Representative: **Cresswell, Thomas Anthony et al**
**J.A. KEMP & CO.**
**14 South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Field of the Invention

The present invention relates to a coating composition which is excellent in nonflocculation properties, noncrystallizability and fluidity and has a clear color tone and high gloss.

Prior Art of the Invention

An acid-curing coating composition which contains an acidic catalyst into a coating composition and is cured under heat has excellent coating properties such as excellent weatherability, etc. A coating formed from an acid-curing coating composition is also reported to be hardly corroded by acid rain, which is one of recent social problems. Therefore, it attracts attention as a coating composition for automobiles. Since, however, an acid-curing coating composition contains an organic solvent, it causes air pollution. In order to cope with this problem, it is under way to develop a high solids acid-curing coating composition of which the organic solvent content is decreased. A high solids coating composition generally refers to a coating composition of which the solvent content is about 50 % by weight or less.

In a high solids acid-curing coating composition, an increase in the coating composition viscosity is compensated by decreasing the molecular weight of a resin constituting the coating composition, by completely etherifying an amino resin, or by some other methods. However, the problem of the high solids acid-curing coating composition is that the curing is slower than any other conventional acid-curing coating compositions. It is therefore required to promote the curing increasing the amount of acid catalyst or by incorporating a strong acid catalyst.

However, an acid-curing coating composition containing an acid catalyst is poor in the pigment dispersion stability. It is therefore desired to develop an effective pigment dispersant or a pigment composition having excellent dispersibility. A variety of pigment dispersants such as pigment derivatives are conventionally used. A pigment derivative having a basic substituent is remarkably effective when used in general coating compositions. However, it has been found that, in an acid-curing coating composition, such a pigment derivative interacts with an acid catalyst, and is not necessarily effective for dispersing a pigment.

Further, JP,B 64-5070 discloses an aluminum salt of a pigment derivative having a carboxyl group as an organic dyestuff derivative having an acidic functional group. However, it has been found that this aluminum salt shows almost no effect on the improvement of an acid-curing coating composition in pigment dispersibility.

Summary of the Invention

It is an object of the present invention to provide an acid-curing coating composition which is improved in the pigment dispersibility.

It is another object of the present invention to provide an acid-curing coating composition which contains a flocculation-free and noncrystalline pigment, has excellent fluidity and gives a coating having a clear color tone and a high gloss.

According to the present invention, the above objects and advantages of the present invention are achieved by a coating composition containing a pigment composition prepared from 100 parts by weight of at least one organic pigment selected from a phthalocyanine pigment, a quinacridone pigment, an isoindolinone pigment, a perylene pigment, a perinon pigment, a dioxazine pigment, a diketopyrrolopyrrole pigment, an anthraquinone pigment and a benzimidazolone pigment or at least one inorganic pigment and 0.5 to 30 parts by weight of an organic dyestuff derivative having a sulfone group prepared by introducing a sulfone group into at least one organic dyestuff which is selected from azo, phthalocyanine, anthraquinone, quinacridone, dioxazine, anthrapyrimidine, anthanthrone, indanthrone, flavanthrone, perinon, perylene and thioindigo dyestuffs, or an equivalent amount of an aluminum salt thereof, and an acid-curing coating composition varnish obtainable by adding at least one solvent and acid catalyst to a resin composition containing at least one hydroxyl group-containing resin as a matrix and an aminoaldehyde resin as a crosslinking agent, wherein the hydroxyl group-containing resin is selected from polyesterpolyol resin, an alkydpolyol resin, an acrylpolyol resin, an epoxypolyol resin and an epoxyesterpolyol resin.

Detailed Description of the Invention

As described above, the pigment composition used in the present invention contains an organic or inorganic pigment and an organic dyestuff derivative having a sulfone group. The pigment used in the present invention refers to a pigment which causes no problems with regard to various durability properties such as light stability, weatherability, solvent resistance, and the like when used in a coating composition. The pigment is at least one member selected from organic pigments such as a phthalocyanine pigment, a quinacridone pigment, an isoindolinone pigment, a perylene pigment, a perinon pigment, a dioxazine pigment, a diketopyrrolopyrrole pigment, an anthraquinone pigment and a benzimidazolone pigment or inorganic pigments such as carbon black, titanium oxide, Chrome Yellow, Cadmium Yellow, red iron oxide, black iron oxide, zinc white, iron blue, ultramarine blue, etc.

The organic dyestuff derivative having a sulfone group, used in the present invention, is prepared by introducing a sulfone group into an organic dyestuff. The organic dyestuff is selected from those having an organic dyestuff structure such as azo, phthalocyanine, anthraquinone, quinacridone, dioxazine, anthrapyrimidine, anthanthrone, indanthrone, flavanthrone, perinon, perylene and thioindigo. A sulfone group can be introduced into the organic dyestuff by reacting the organic dyestuff with a sulfonating agent such as sulfuric acid, fuming sulfuric acid and chlorosulfuric acid according to a conventional method. A coupler or diazo component for the production of some azo pigments preliminarily contains a sulfone group. In this case, the produced azo pigment may be used as an organic dye derivative having a sulfone group in the present invention. The number of sulfone groups introduced into the organic dye is at least one per molecule. In practical use, it is advantageous to select an organic dyestuff derivative having a chemical structure in which the skeleton is the same as, or similar to, the skeleton of the pigment. That is, such an organic dyestuff derivative exhibits has a high effect on nonflocculation properties, noncrystallizability and fluidity. Further, since such an organic dyestuff has a hue similar to the pigment, desirably, the transition of the hue caused by the addition of the organic dyestuff derivative is small.

The amount of the organic dyestuff derivative having a sulfone group for use per 100 parts by weight of the pigment is 0.5 to 30 parts by weight. When this amount is less than 0.5 part by weight, the effect thereof on the pigment dispersibility is small. Even when it is more than 30 parts by weight, no further effect can be obtained.

In the present invention, the organic dyestuff derivative having a sulfone group may be used in the form of an aluminum salt. The aluminum salt is advantageous for the preparation of the organic dyestuff derivative having a sulfone group. That is, the organic dyestuff derivative having a sulfone group is generally prepared by introducing a sulfone group to the organic dyestuff, pouring the reaction mixture into a large amount of water and filtering it. Since, however, the organic dyestuff derivative having a sulfone group has high affinity to water, the filtration requires a long time. When the sulfone group is converted to an aluminum salt, the affinity to water is decreased. As a result, the filtration can be easily carried out, and the time required for the filtration can be decreased.

The coating composition of the present invention comprises the above pigment composition and an acid-curing coating composition varnish. The coating composition of the present invention can be produced by adding the pigment and the organic dyestuff derivative having a sulfone group or the aluminum salt thereof to the acid-curing coating composition varnish, milling the resultant mixture with a dispersing device such as a ball mill or a sand mill, and optionally adding an additive such as an antisagging agent. The antisagging agent refers to an additive which imparts a coating composition with thixotropic properties so that the coating composition does not sag when applied with a sprayer, etc. Preferably, the pigment and the organic dyestuff having a sulfone group or the aluminum salt thereof are preliminarily mixed to form a slurry. In one preferred embodiment, the pigment and the sodium salt of the organic dyestuff derivative having a sulfone group are fully dispersed to form a slurry, and a water-soluble aluminum salt such as aluminum chloride or aluminum sulfate is added to the resultant slurry of the mixture to form an aluminum salt of the organic dyestuff derivative.

In using such a pigment as copper phthalocyanine, quinacridone or dioxazine which requires a process for converting it to a pigment form, such as solvent salt milling, the organic dyestuff derivative having a sulfone group or the aluminum salt thereof may be mixed with the pigment during the process for converting it to a pigment form.

The acid-curing coating composition varnish used in the present invention is a varnish which is prepared by adding a solvent and acid catalyst to a resin composition containing a hydroxyl group-containing resin as a matrix and an aminoaldehyde resin as a crosslinking agent.

The hydroxyl group-containing resin is selected from a polyesterpolyol resin, an alkydpolyol resin, an acrylpolyol resin, an epoxypolyol resin and an epoxyesterpolyol resin.

The polyesterpolyol resin is obtained by subjecting a polyhydric alcohol having 2 to 6 hydroxyl groups in the molecule, a polybasic acid having 2 to 4 carboxyl groups in the molecule and, optionally, a monobasic acid or a monohydric alcohol to an esterification reaction. The above polyhydric alcohol is selected, for example, from ethylene glycol, polyethylene glycol, neopentyl glycol, 1,6-hexanediol, pentanediol, butylene glycol, 1,5-pentanediol, trimethylolethane, trimethylolpropane, glycerin and pentaerythritol. The above polybasic acid is selected, for example, from phthalic acid, isophthalic acid, terephthalic acid, maleic acid, methyl terephthalate, tetrahydrophthalic acid, trimellitic acid, pyromellitic acid and acid anhydrides of these. The above monohydric alcohol is selected, for example, from n-octyl alcohol, isooctyl alcohol, 2-ethylhexyl alcohol, n-nonyl alcohol and n-decyl alcohol. The monobasic acid is selected, for example, from coconut oil fatty acid, soybean oil fatty acid, oleic acid and lauric acid.

The alkydpolyol resin is obtained by esterifying the above polybasic acid and a fat and oil or a fatty acid with the above polyhydric alcohol. The fat and oil is selected, for example, from castor oil, linseed oil, sunflower oil, soybean oil, corn oil, cotton seed oil, hempseed oil, rice bran oil, coconut oil, olive oil and palm oil. The fatty acid is selected, for example, from heptanoic acid, octanoic acid, nonanoic acid, decanoic acid and isostearic acid.

The acrylpolyol resin is obtained by homopolymerizing a hydroxyl group-containing vinyl monomer or by copolymerizing a hydroxyl group-containing vinyl monomer and any one of a carboxylic acid-containing monomer, a styrene monomer and a vinyl monomer. The above hydroxyl group-containing monomer is selected, for example, from (meth)acrylic acid hydroxyesters such as hydroxyethyl (meth)acrylate and hydroxypropyl (meth)acrylate and adducts of the (meth)acrylic acid hydroxyesters with lactones such as $\epsilon$-caprolactone and $\gamma$-valerolactone. The carboxylic acid-containing monomer is selected, for example, from alkyl (meth)acrylates such as methyl (meth)acrylate, ethyl (meth)acrylate and propyl (meth)acrylate, acrylic acid, methacrylic acid and itaconic acid. The styrene monomer is selected, for example, from styrene and $\alpha$-methylstyrene. The vinyl monomer is selected, for example, from acrylonitrile, methacrylonitrile and vinyl acetate.

The epoxypolyol resin includes hydroxyl group-containing epoxy resins such as Epikote 828, 1001, 1004 and 1007 (trade name, supplied by Shell Chemical Co.)

The epoxyesterpolyol resin is obtained by reacting the above epoxypolyol resin with the above monobasic acid or the above polybasic acid.

The hydroxyl group-containing resin used in the present invention also includes a modified polyol resin obtained by modifying the above polyol resin with an isocyanate compound such as tolylene diisocyanate, hexamethylene diisocyanate or a isophorone diisocyanate or with a silicone resin.

As described previously, the aminoaldehyde resin is used as a crosslinking agent in the acid-curing coating composition varnish. The aminoaldehyde resin is obtained by subjecting an amino group-containing compound and an aldehyde compound to an addition-condensation reaction or by modifying the so-obtained condensation product with an alcohol. The amino group-containing compound is selected, for example, from melamine, urea, acetoguanamine, benzoguanamine, spiroguranamine and steroguanamine. The aldehyde compound is selected, for example, from form aldehyde, p-formaldehyde, acetaldehyde and glyoxal. As an aminoaldehyde resin, preferred are the so-obtained addition-condensation products completely etherified with an alcohol having 1 to 4 carbon atoms.

Specific examples of the aminoaldehyde resin include hexamethyl etherified methylol melamine, hexabutyl etherified methylol melamine, methyl butyl etherified methylol melamine, methyl etherified methylol melamine, butyl etherified methylol melamine and isobutyl etherified methylol melamine.

The hydroxyl group-containing resin/aminoaldehyde resin mixing weight ratio is 90/10 to 30/70.

The acid-curing coating composition varnish used in the present invention is obtained by adding a solvent and acid catalyst to a resin composition containing the hydroxyl group-containing resin as a matrix and the aminoaldehyde resin as a crosslinking agent.

The above solvent is selected, for example, from hydrocarbons such as toluene and xylene, ketones such as methyl ethyl ketone and methyl isobutyl ketone, esters such as ethyl acetate and butyl acetate, ethers such as dioxane and ethylene glycol diethyl ether and alcohols such as butanol and propanol. These solvents may be used alone or in combination.

The acid catalyst is selected, for example, from sulfonic acid compounds such as p-toluenesulfonic acid, alkylbenzenesulfonic acid and alkylnaphthalenesulfonic acid, phosphoric acid compounds such as metaphosphoric acid, orthophosphoric acid, pyrophosphoric acid, tripolyphosphoric acid, phosphoric acid, trimetaphosphoric acid, triphosphoric acid, tetrametaphosphoric acid, phosphorous acid, monobutylphosphoric acid, monoethylhexylphosphoric acid and monolaurylphosphoric acid, carboxylic acid compounds such as formic acid, oxalic acid, acetic acid and lactic acid, mineral acids such as sulfuric acid and hydrochloric acid, and mineral acid salts such as ammonium hydrochloride.

4

The acid-curing coating composition of the present invention is not only excellent in nonflocculation properties, noncrystallizability and fluidity but also gives a coating having excellent gloss and hardness. The coating obtained from the acid-curing coating composition of the present invention is practically equivalent or superior to a pigment with respect to weatherability and solvent resistance.

The present invention will be described hereinafter by reference to Examples, in which "part" stands for "part by weight" and "%" stands for "% by weight".

Preparation Example 1

18 Parts of C.I. Pigment Blue 15 (copper phthalocyanine) was dissolved in 200 parts of 4 % fuming sulfuric acid, and the resultant mixture was maintained at 100°C for 1 hour for sulfonation. The reaction mixture was diluted with 2,000 parts of water, filtered, washed, dried and pulverized to give 20 parts of a monosulfonation product (a).

Preparation Example 2

18 Parts of C.I. Pigment Violet 19 was dissolved in 200 parts of 98 % sulfuric acid, and the resultant mixture was maintained at 80°C for 1 hour for sulfonation. The reaction mixture was diluted with 2,000 parts of water, filtered and washed with dilute hydrochloric acid to obtain a paste. The paste was dispersed in 1,000 parts of water to form a slurry. Then, sodium hydroxide was added to the slurry to render it weak-alkaline, and the slurry was heated up to 60°C. 8 Parts of aluminum sulfate was added to the slurry to form an aluminum salt, and the resultant reaction mixture was filtered, washed with water, dried and pulverized to give 20 parts of a monosulfonation product (b).

Preparation Example 3

Organic dyestuffs shown in Table 1 were sulfonated in the same manner as in Example 2, and aluminum sulfate was added to give sulfonation products (c) to (j).

Table 1

| Organic dyestuff | Sulfonation product |
|---|---|
| C.I. Pigment Violet 23 | c |
| C.I. Pigment Yellow 108 | d |
| C.I. Pigment Red 168 | e |
| C.I. Pigment Blue 60 | f |
| C.I. Pigment Yellow 24 | g |
| C.I. Pigment Orange 43 | h |
| C.I. Pigment Red 178 | i |
| C.I. VAt Red 41 | j |

Example 1 and Comparative Example 1

10 Parts of C.I. Pigment Blue 15:1 (monochlorocopper phthalocyanine) and 0.5 part of the sulfonation product (a) obtained in Preparation Example 1 were dispersed in 89.5 parts of a varnish consisting of 25 parts of polyesterpolyol (resin), 25 parts of methyl etherified methylol melamine (crosslinking agent), 1 part of dodecylbenzenesulfonic acid (acid catalyst) and 49 parts of butyl acetate (solvent) to obtain an acid-curing coating composition (Example 1). Further, 10 parts of C.I. Pigment Blue 15:1 was dispersed in the same varnish as above to obtain an acid-curing coating composition. These acid-curing coating compositions were measured for a viscosity with a Brookfield viscometer. Table 2 shows the results. As is clearly shown in Table 2, the coating composition according to the present invention showed a remarkably low viscosity than the coating composition obtained in Comparative Example 1. Further, the coating obtained from the coating composition according to the present invention was excellent in clearness of color tone and gloss over the coating obtained from the coating composition in Comparative Example 1.

Concerning the nonflocculation properties and noncrystallizability, the above-obtained coating compositions were evaluated in the following manner on color separation which is the most crucial problem in practical use. That is, a coating composition was diluted with a base coating composition of titanium oxide to prepare a tint-color coating composition having a pigment/titanium oxide weight ratio of 1/10. Then, the tint-color coating composition was viscosity-adjusted with butyl acetate, and placed into a test tube. Then, a change on the glass wall of the test tube was observed. When the coating composition according to the present invention and the coating composition obtained in Comparative Example 1 were evaluated in this manner, the coating composition according to the present invention showed less color separation with time than the coating composition obtained in Comparative Example 1. In addition, the above "base coating composition of titanium oxide" was prepared by dispersing 25 parts of titanium oxide in 75 parts of the same varnish.

Example 2

100 Parts of C.I. Pigment Blue 15:1 and 5 parts of the sulfonation product (a) obtained in Preparation Example 1 were dispersed in 2,000 parts of water to form a slurry, and sodium hydroxide was added to the slurry to render it week-alkaline. The slurry was heated up to 60°C, and then an aqueous solution of 2 parts of aluminum sulfate to convert the sulfonation product to aluminum salt while the pigment was co-present. Then, the reaction mixture was filtered, washed with water, dried, and pulverized to give 105 parts of a mixture of the pigment with a sulfonation product (k). This mixture was dispersed in the same varnish as that used in Example 1 such that the pigment content was 10 % by weight to obtain an acid-curing coating composition. The acid-curing coating composition was measured for a viscosity. Table 2 shows the result. As shown in Table 2, the coating composition according to the present invention showed a remarkably low viscosity than the coating composition obtained in Comparative Example 1. Further, the coating composition according to the present invention was excellent in nonflocculation properties and noncrystallizability over the coating composition obtained in Comparative Example 1. Moreover, the coating obtained from the coating composition according to the present invention was excellent in clearness of color tone and gloss over the coating obtained from the coating composition in Comparative Example 1.

Example 3 and Comparative Example 2

10 Parts of C.I. Pigment Red 53 in a slurry state which was a sodium salt of a product obtained by a coupling reaction between 2-amino-5-chloro-p-toluenesulfonic acid and 2-naphthol in an alkaline state, and 100 parts of C.I. Pigment Red 176 in a slurry state which was also obtained by a coupling reaction in an alkaline state were mixed, and a hydrochloric acid was added to the mixture to bring it into a weakly acidic state. Then, the mixture was filtered, washed with water, dried and pulverized to give 110 parts of a pigment composition containing C.I. Pigment Red 176 and a sulfonation product (1) of C.I. Pigment Red 53 in which the sodium was replaced with hydrogen. This pigment composition was dispersed in the same varnish as that used in Example 1 such that the pigment content was 10 % by weight to give a coating composition (Example 3). Separately, C.I. Pigment Red 176 alone was dispersed in the same varnish as that used in Example 1 such that the pigment content was 10 % by weight to give a coating composition. These coating compositions were measured for a viscosity. Table 2 shows the results. As shown in Table 2, the coating composition according to the present invention showed a remarkably low viscosity than the coating composition obtained in Comparative Example 2. Further, the coating composition according to the present invention was excellent in nonflocculation properties and noncrystallizability over the coating composition obtained in Comparative Example 2. Moreover, the coating obtained from the coating composition according to the present invention was excellent in clearness of color tone and gloss over the coating obtained from the coating composition in Comparative Example 1.

Examples 4 - 17 and Comparative Examples 3 - 14

Each of pigments shown in Table 2 (Examples 4 to 17) and one of the sulfonation products obtained in Preparation Examples 1 to 3 (a to j) were dispersed in the same varnish as that used in Example 1 Such that the pigment content was 10 % by weight to give coating compositions. Separately, each of pigments shown in Table 2 (Comparative Examples 3 to 14) was dispersed in the same varnish as that used in Example 1 such that the pigment content was 10 % by weight to give coating compositions. These coating compositions were measured for a viscosity. Table 2 shows the results. As shown in Table 2, each of the coating compositions according to the present invention showed remarkably low viscosities than the coating

6

composition obtained in the correspondingComparative Example. Further, each of the coating compositions according to the present invention was excellent in nonflocculation properties and noncrystallizability over the coating composition obtained in the corresponding Comparative Example. Moreover, each of the coatings obtained from the coating compositions according to the present invention was excellent in clearness of color tone and gloss over the coating obtained from the coating composition in the corresponding Comparative Examples.

## Table 2

| Ex/CEx | Pigment | Sulfonation product (%) | | Viscosity 6rpm | 12rpm | 30rpm | 60rpm |
|---|---|---|---|---|---|---|---|
| CEx.1 | C.I.Pigment Blue 15:1 (phthalocyanine pigment) | - | (0) | 2,860 | 1,420 | 880 | 520 |
| Ex.1 | ditto | a | (5) | 60 | 60 | 60 | 60 |
| Ex.2 | ditto | k | (5) | 55 | 55 | 55 | 55 |
| CEx.2 | C.I.Pigment Red 176 (benzimidazolone pigment) | - | (0) | 3,700 | 1,860 | 1,020 | 640 |
| Ex.3 | ditto | l | (10) | 260 | 230 | 210 | 190 |
| CEx.3 | C.I.Pigment Red 19 (quinacridone pigment) | - | (0) | 4,820 | 2,200 | 1.380 | 860 |
| Ex.4 | ditto | b | (5) | 100 | 100 | 100 | 100 |
| CEx.4 | C.I.Pigment Red 122 (quinacridone pigment) | - | (0) | 3,890 | 1,940 | 1,040 | 660 |
| Ex.5 | ditto | b | (10) | 240 | 200 | 180 | 180 |
| CEx.5 | C.I.Pigment Red 101 (inorganic pigment) | - | (0) | 280 | 250 | 220 | 200 |
| Ex.6 | ditto | b | (10) | 90 | 80 | 80 | 80 |
| CEx.6 | C.I.Pigment Violet 23 (dioxazine pigment) | - | (0) | 3,240 | 1,620 | 960 | 580 |
| Ex.7 | ditto | c | (10) | 50 | 50 | 50 | 50 |
| CEx.7 | C.I.Pigment Yellow 108 (Anthraquinone pigment) | - | (0) | 3,660 | 1,820 | 1,000 | 640 |
| Ex.8 | ditto | d | (20) | 320 | 280 | 260 | 250 |
| CEx.8 | C.I.Pigment Red 168 (Anthraquinone pigment) | - | (0) | 2,760 | 1,300 | 840 | 500 |
| Ex.9 | ditto | e | (10) | 260 | 240 | 240 | 230 |
| CEx.9 | C.I.Pigment Blue 60 (Anthraquinone pigment) | - | (0) | 2,420 | 1,220 | 780 | 480 |
| Ex.10 | ditto | f | (10) | 160 | 140 | 120 | 110 |
| Ex.11 | ditto | a | (10) | 380 | 320 | 280 | 260 |
| CEx.10 | C.I.Pigment Yellow 24 (Anthraquinone pigment) | - | (0) | 2,100 | 1,020 | 660 | 400 |
| Ex.12 | ditto | g | (10) | 220 | 200 | 190 | 180 |
| CEx.11 | C.I.Pigment Yellow 110 (Isoindolinone pigment) | - | (0) | 1,820 | 980 | 740 | 640 |
| Ex.13 | ditto | g | (10) | 520 | 400 | 320 | 290 |
| CEx.12 | C.I.Pigment Orange 43 (perinon pigment) | - | (0) | 3,300 | 1,640 | 980 | 580 |
| Ex.14 | ditto | h | (10) | 500 | 400 | 340 | 300 |
| CEx.13 | C.I.Pigment Red 178 (Perylene pigment) | - | (0) | 3,440 | 1,700 | 980 | 600 |
| Ex.15 | ditto | i | (10) | 110 | 100 | 100 | 100 |
| CEx.14 | C.I.Pigment Red 254 (Diketopyrrolopyrrol pigment) | - | (0) | 1,840 | 940 | 580 | 400 |
| Ex.16 | ditto | i | (15) | 140 | 130 | 120 | 120 |
| Ex.17 | ditto | j | (15) | 220 | 180 | 160 | 140 |

Ex = Example, CEx = Comparative Example

**Claims**

1. A coating composition containing a pigment composition prepared from 100 parts by weight of at least one organic pigment selected from a phthalocyanine pigment, a quinacridone pigment, an isoindolinone

8

pigment, a perylene pigment, a perinon pigment, a dioxazine pigment, a diketopyrrolopyrrole pigment, an anthraquinone pigment and a benzimidazolone pigment or at least one inorganic pigment and 0.5 to 30 parts by weight of an organic dyestuff derivative having a sulfone group prepared by introducing a sulfone group into at least one organic dyestuff which is selected from azo, phthalocyanine, anthraquinone, quinacridone, dioxazine, anthrapyrimidine, anthanthrone, indanthrone, flavanthrone, perinon, perylene and thioindigo dyestuffs, or an equivalent amount of an aluminum salt thereof, and an acid-curing coating composition varnish obtainable by adding at least one solvent and acid catalyst to a resin composition containing at least one hydroxyl group-containing resin as a matrix and an aminoaldehyde resin as a crosslinking agent, wherein the hydroxyl group-containing resin is selected from polyesterpolyol resin, an alkydpolyol resin, an acrylpolyol resin, an epoxypolyol resin and an epoxyesterpolyol resin.

2.  A coating composition according to claim 1, wherein the resin composition contains the hydroxyl group-containing resin (A) and the aminoaldehyde resin (B) in an A/B weight ratio of 90/10 to 30/70.

3.  A coating composition according to claim 1 or 2, wherein the solvent is selected from hydrocarbons, ketones, esters, ethers and alcohols.

4.  A coating composition according to any one of claims 1 to 3, wherein the acid catalyst is selected from sulfonic acid compounds, phosphoric acid compounds, carboxylic acid compounds, mineral acids and mineral acid salts.

5.  An article having on at least one surface thereof a cured coating of a coating composition as claimed in any one of the preceding claims.

**Patentansprüche**

1.  Beschichtungszusammensetzung, die eine Pigmentzusammensetzung enthält, hergestellt aus 100 Gewichtsanteilen mindestens eines organischen Pigments, ausgewählt aus einem Phthalocyanin-Pigment, einem Chinacridon-Pigment, einem Isoindolinon-Pimgent, einem Perylen-Pigment, einem Perinon-Pigment, einem Dioxazin-Pigment, einem Diketopyrolopyrrol-Pigment, einem Anthrachinon-Pigment und einem Benzimidazolon-Pigment oder mindestens einem anorganischen Pigment und 0,5 bis 30 Gewichtsanteilen eines organischen Farbstoff-Derivats mit einer Sulfongruppe, hergestellt durch Einführen einer Sulfongruppe in mindestens einen organischen Farbstoff, der ausgewählt ist aus Azo, Phthalocyanin, Anthrachinon, Chinacridon, Dioxazin, Anthrapyrimidin, Anthanthron, Indanthron, Flavanthron, Perinon, Perylen und Thioindigo-Farbstoffen, oder einer äquivalenten Menge eines Aluminiumsalzes davon, und ein säurehärtender Beschichtungszusammensetzungslack, der durch Zugabe mindestens eines Lösungsmittels und Säurekatalysators zu einer Harzzusammensetzung erhalten wird, die mindestens ein eine Hydroxylgruppe enthaltendes Harz als eine Matrix und ein Aminoaldehydharz als ein Vernetzungsmittel enthält, worin das eine Hydroxylgruppe enthaltende Harz ausgewählt ist aus Polyesterpolyolharz, einem Alkydpolyolharz, einem Acrylpolyolharz, einem Epoxypolyolharz und einem Epoxyesterpolyolharz.

2.  Beschichtungszusammensetzung nach Anspruch 1, worin die Harzzusammensetzung das eine Hydroxylgruppe enthaltende Harz (A) und das Aminoaldehydharz (B) in einem A/B-Gewichtsverhältnis von 90/10 bis 30/70 enthält.

3.  Beschichtungszusammensetzung nach Anspruch 1 oder 2, worin das Lösungsmittel ausgewählt ist aus Kohlenwasserstoffen, Ketonen, Estern, Ethern und Alkoholen.

4.  Beschichtungszusammensetzung nach einem der Ansprüche 1 bis 3, worin der Säurekatalysator ausgewählt ist aus Sulfonsäureverbindungen, Phosphorsäureverbindungen, Carboxylsäureverbindungen, Mineralsäuren und Mineralsäuresalzen.

5.  Gegenstand, der auf mindestens einer seiner Oberflächen eine gehärtete Beschichtung aus einer Beschichtungszusammensetzung nach einem der vorangegangenen Ansprüche aufweist.

**Revendications**

1. Composition de revêtement contenant une composition de pigments préparée à partir de 100 parties en poids d'au moins un pigment organique choisi parmi un pigment de phtalocyanine, un pigment de quinacridone, un pigment d'iso-indolinone, un pigment pérylénique, un pigment périnonique, un pigment dioxazinique, un pigment dicétopyrrolopyrrolique, un pigment anthraquinonique et un pigment de benzimidazolone ou d'au moins un pigment minéral et 0,5 à 30 parties en poids d'un dérivé de matière colorante organique ayant un groupe sulfone préparé en introduisant un groupe sulfone dans au moins une matière colorante organique qui est choisie parmi les matières colorantes azoïques, phtalocyanines, anthraquinoniques, quinacridones, dioxaziniques, anthrapyrimidiques, anthanthréniques, indanthréniques, flavanthréniques, périnoniques, péryléniques et thioindigoïdes, ou une quantité équivalente d'un sel d'aluminium de celui-ci, et un vernis à base d'une composition de revêtement durcissant sous l'effet d'un acide que l'on obtient en ajoutant au moins un solvant et un catalyseur acide à une composition de résines comprenant au moins une résine contenant un groupe hydroxyle comme matrice et une résine aminoplaste comme agent de réticulation, dans laquelle la résine contenant un groupe hydroxyle est choisie parmi une résine polyester-polyol, une résine alkyde-polyol, une résine acryle-polyol, une résine époxy-polyol et une résine époxy-ester-polyol.

2. Composition de revêtement selon la revendication 1, dans laquelle la composition de résines comprend la résine contenant un groupe hydroxyle (A) et la résine aminoplaste (B) dans un rapport pondéral A/B de 90/10 à 30/70.

3. Composition de revêtement selon la revendication 1 ou 2, dans laquelle le solvant est choisi parmi les hydrocarbures, les cétones, les esters, les éthers et les alcools.

4. Composition de revêtement selon l'une quelconque des revendications 1 à 3, dans laquelle le catalyseur acide est choisi parmi les composés de l'acide sulfonique, les composés de l'acide phosphorique, les composés de l'acide carboxylique, les acides minéraux et les sels d'acides minéraux.

5. Article ayant sur une de ses surfaces au moins un revêtement durci d'une composition de revêtement selon l'une quelconque des revendications précédentes.